(19) Europäisches Patentamt
European Patent Office
Office européen des brevets

(11) **EP 4 761 407 A1**

(12) **EUROPEAN PATENT APPLICATION**
published in accordance with Art. 153(4) EPC

(43) Date of publication:
**17.06.2026 Bulletin 2026/25**

(21) Application number: **23948752.3**

(22) Date of filing: **11.08.2023**

(51) International Patent Classification (IPC):
***H04W 72/0446*** *(2023.01)*

(52) Cooperative Patent Classification (CPC):
**H04W 72/0446; H04W 72/51**

(86) International application number:
**PCT/CN2023/112743**

(87) International publication number:
**WO 2025/035317 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **QIAO, Xuemei
Beijing 100085 (CN)**
• **LI, Yanhua
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **INFORMATION PROCESSING METHOD AND APPARATUS, AND COMMUNICATION DEVICE,
COMMUNICATION SYSTEM AND STORAGE MEDIUM**

(57) Disclosed in the embodiments of the present disclosure are an information processing method and apparatus, which are used for determining a peak data rate of a terminal, wherein the type of the terminal is a first type, and the peak data rate is agreed by a protocol. A peak data rate of a first-type terminal is determined on the basis of a protocol agreement, and therefore ambiguity in determination performed by a network side and a terminal side regarding a peak rate is avoided, signaling overheads can be effectively reduced, and the communication efficiency of a system is improved.

FIG. 2A

**Description**

**TECHNICAL FIELD**

The disclosure relates to the field of communication technology, specifically to a method for processing information and an apparatus, a communication device, a communication system, and a storage medium.

**BACKGROUND**

To address problems such as data rate fluctuation, signaling overhead and latency caused by frequent handovers of terminals, the 5th generation mobile communication technology (5G) introduced various mobility enhancement technologies, including for example conditional handover (CHO) and conditional primary and secondary cell addition/change (CPAC).

A peak data rate of a terminal correlates with a capability of the terminal, and the peak data rate may be used to constrain a transmission block size (TBS) of a TB scheduled by a network device. Specifically, the peak data rate may refer to a ratio of a sum of TBSs of all TBs scheduled for one terminal by the network device within one slot to a duration of the slot, which shall fall within a constraint range of the peak data rate.

**SUMMARY**

Embodiments of the disclosure provide a method for processing information and an apparatus, a communication device, a communication system, and a storage medium.

According to a first aspect of the embodiments of the disclosure, a method for processing information is provided, which is performed by a terminal. The method includes:

determining a peak data rate of the terminal,
in which a type of the terminal is a first type, and the peak data rate is stipulated by a protocol.

According to a second aspect of the embodiments of the disclosure, a method for processing information is provided, which is performed by a network device. The method includes:

determining a peak data rate of a terminal,
in which a type of the terminal is a first type, and the peak data rate is stipulated by a protocol.

According to a third aspect of the embodiments of the disclosure, a method for processing information is provided. The method includes:

a terminal and a network device determining a peak data rate of the terminal,
in which a type of the terminal is a first type, and the peak data rate is stipulated by a protocol.

According to a fourth aspect of the embodiments of the disclosure, a terminal is provided, which includes:

a processing module, configured to determine a peak data rate of the terminal,
in which a type of the terminal is a first type, and the peak data rate is stipulated by a protocol.

According to a fifth aspect of the embodiments of the disclosure, a network device is provided, which includes:

a processing module, configured to determine a peak data rate of a terminal,
in which a type of the terminal is a first type, and the peak data rate is stipulated by a protocol.

The solution provided by the embodiments of the disclosure determines the peak data rate of the terminal, in which the type of the terminal is the first type, and the peak data rate is stipulated by the protocol. By determining the peak data rate of the terminal of the first type in accordance with a protocol stipulation, an ambiguity between a network side and a terminal side in determining a peak rate is avoided, effectively reducing a signaling overhead, and improving a communication efficiency of a system.

## BRIEF DESCRIPTION OF THE DRAWINGS

To describe the technical solutions in the embodiments of the disclosure or the background art more clearly, the drawings used in the embodiments of the disclosure or the background art are described below.

FIG. 1 is a schematic diagram of a communication system according to an embodiment of the disclosure.

FIG. 2A is a schematic interaction diagram of a method for processing information according to an embodiment of the disclosure.

FIG. 3A is a schematic flowchart of a method for processing information according to an embodiment of the disclosure.

FIG. 3B is a schematic flowchart of a method for processing information according to an embodiment of the disclosure.

FIG. 4A is a schematic flowchart of a method for processing information according to an embodiment of the disclosure.

FIG. 4B is a schematic flowchart of a method for processing information according to an embodiment of the disclosure.

FIG. 5 is a schematic flowchart of a method for processing information according to an embodiment of the disclosure.

FIG. 6A is a schematic diagram of a terminal according to an embodiment of the disclosure.

FIG. 6B is a schematic diagram of a network device according to an embodiment of the disclosure.

FIG. 7A is a schematic diagram of a communication device according to an embodiment of the disclosure.

FIG. 7B is a schematic diagram of a chip according to an embodiment of the disclosure.

## DETAILED DESCRIPTION

Embodiments of the disclosure provide a method for processing information and an apparatus, a communication device, a communication system, and a storage medium.

According to a first aspect of the embodiments of the disclosure, a method for processing information is provided, which is performed by a terminal. The method includes:

determining a peak data rate of the terminal,
in which a type of the terminal is a first type, and the peak data rate is stipulated by a protocol.

In the above embodiments, the peak data rate of the terminal of the first type may be determined in accordance with a protocol stipulation, which avoids an ambiguity between a network side and a terminal side in determining a peak rate, effectively reduces a signaling overhead, and improves a communication efficiency of a system.

In combination with some embodiments of the first aspect, in some embodiments, the method further includes: sending capability information of the terminal to a network device,
in which the capability information includes at least one of:

a maximum number of multiple-input multiple-output (MIMO) layers of an uplink (UL) channel supported by the terminal;
a maximum number of MIMO layers of a downlink (DL) channel supported by the terminal;
a UL modulation order supported by the terminal;
a DL modulation order supported by the terminal; or
a scaling factor.

In the above embodiments, the peak data rate of the terminal of the first type may be determined in accordance with the protocol stipulation, which clarifies a reporting behavior of the capability information of the terminal, avoids the ambiguity between the network side and the terminal side in determining the peak rate, effectively reduces the signaling overhead, and improves the communication efficiency of the system.

In combination with some embodiments of the first aspect, in some embodiments, at least one piece of following information in the capability information is not applicable to the terminal of the first type:

the UL modulation order supported by the terminal;
the DL modulation order supported by the terminal; or
the scaling factor.

In the above embodiments, the peak data rate of the terminal of the first type may be determined in accordance with the protocol stipulation. It is unnecessary to report relevant parameters in the capability information for determining the peak data rate of the terminal, which may effectively reduce the signaling overhead, decrease a computational complexity of the terminal and the network device, and improve the communication efficiency of the system.

In combination with some embodiments of the first aspect, in some embodiments, the capability information is further used to determine the peak data rate of a terminal of a second type.

In the above embodiments, the peak data rate of the terminal of the second type may be determined based on a capability of the terminal, which enhances a universality of the solution and improves the communication efficiency of the system.

In combination with some embodiments of the first aspect, in some embodiments, the peak data rate corresponding to a UL channel of the terminal of the first type is the same as or different from the peak data rate corresponding to a DL channel of the terminal of the first type.

In the above embodiments, the protocol may stipulate that the peak data rate corresponding to the UL channel and the peak data rate corresponding to the DL channel of the terminal of the first type may be the same or different, which may enhance a flexibility of the solution, improve a channel utilization, and improve the communication efficiency of the system.

In combination with some embodiments of the first aspect, in some embodiments, the peak data rate of the terminal of the first type supporting half duplex (HD)-frequency division duplex (FDD) is the same as the peak data rate of the terminal of the first type supporting full duplex (FD)-FDD.

In the above embodiments, the protocol may stipulate that the terminal of the first type supporting the HD-FDD and the terminal of the first type supporting the FD-FDD have the same peak data rate, which may reduce the computational complexity of the terminal and the network device and improve the communication efficiency of the system.

In combination with some embodiments of the first aspect, in some embodiments, a plurality of terminals of the first type have a same peak data rate, and UL modulation orders and/or DL modulation orders supported by the plurality of terminals of the first type respectively are different from each other.

In the above embodiments, the protocol may stipulate that the plurality of terminals of the first type supporting different modulation orders have the same peak data rate, which may reduce the computational complexity of the terminal and the network device, and improve the communication efficiency of the system.

In combination with some embodiments of the first aspect, in some embodiments, a plurality of terminals of the first type have a same peak data rate, and numbers of MIMO layers of UL channels and/or numbers of MIMO layers of DL channels supported by the plurality of terminals of the first type respectively are different from each other.

In the above embodiments, the protocol may stipulate that the plurality of terminals of the first type supporting different numbers of MIMO layers have the same peak data rate, which may reduce the computational complexity of the terminal and the network device, and improve the communication efficiency of the system.

According to a second aspect of the embodiments of the disclosure, a method for processing information is provided, which is performed by a network device. The method includes:

determining a peak data rate of a terminal,
in which a type of the terminal is a first type, and the peak data rate is stipulated by a protocol.

In the above embodiments, the peak data rate of the terminal of the first type may be determined in accordance with the protocol stipulation, which avoids the ambiguity between the network side and the terminal side in determining the peak rate, effectively reduces the signaling overhead, and improves the communication efficiency of the system.

In combination with some embodiments of the second aspect, in some embodiments, the method further includes:

receiving capability information of the terminal sent by the terminal,
in which the capability information includes at least one of:

a maximum number of MIMO layers of a UL channel supported by the terminal;
a maximum number of MIMO layers of a DL channel supported by the terminal;
a UL modulation order supported by the terminal;
a DL modulation order supported by the terminal; or
a scaling factor.

In combination with some embodiments of the second aspect, in some embodiments, at least one piece of following information in the capability information is not applicable to the terminal of the first type:

the UL modulation order supported by the terminal;
the DL modulation order supported by the terminal; or
the scaling factor.

In combination with some embodiments of the second aspect, in some embodiments, the capability information is further used to determine the peak data rate of a terminal of a second type.

In combination with some embodiments of the second aspect, in some embodiments, the peak data rate corresponding to a UL channel of the terminal of the first type is the same as or different from the peak data rate corresponding to a DL channel of the terminal of the first type.

In combination with some embodiments of the second aspect, in some embodiments, the peak data rate of the terminal of the first type supporting HD-FDD is the same as the peak data rate of the terminal of the first type supporting FD-FDD.

In combination with some embodiments of the second aspect, in some embodiments, a plurality of terminals of the first type have a same peak data rate, and UL modulation orders and/or DL modulation orders supported by the plurality of terminals of the first type respectively are different from each other.

In combination with some embodiments of the second aspect, in some embodiments, a plurality of terminals of the first type have a same peak data rate, and the plurality of terminals of the first type supports different numbers of MIMO layers of a UL channel and/or different maximum numbers of MIMO layers of a DL channel.

According to a third aspect of the embodiments of the disclosure, a method for processing information is provided. The method includes:

a terminal and a network device determining a peak data rate of the terminal,
in which a type of the terminal is a first type, and the peak data rate is stipulated by a protocol.

In the above embodiments, the peak data rate of the terminal of the first type may be determined in accordance with the protocol stipulation, which avoids the ambiguity between the network side and the terminal side in determining the peak rate, effectively reduces the signaling overhead, and improves the communication efficiency of the system.

In combination with some embodiments of the third aspect, in some embodiments, the method further includes:

the terminal sending capability information of the terminal to the network device,
in which the capability information includes at least one of:

a maximum number of MIMO layers of a UL channel supported by the terminal;
a maximum number of MIMO layers of a DL channel supported by the terminal;
a UL modulation order supported by the terminal;
a DL modulation order supported by the terminal; or
a scaling factor.

In combination with some embodiments of the third aspect, in some embodiments, at least one piece of following information in the capability information is not applicable to the terminal of the first type:

the UL modulation order supported by the terminal;
the DL modulation order supported by the terminal; or
the scaling factor.

In combination with some embodiments of the third aspect, in some embodiments, the capability information is further used to determine the peak data rate of a terminal of a second type.

In combination with some embodiments of the third aspect, in some embodiments, the peak data rate corresponding to a UL channel of the terminal of the first type is the same as or different from the peak data rate corresponding to a DL channel of the terminal of the first type.

In combination with some embodiments of the third aspect, in some embodiments, the peak data rate of the terminal of the first type supporting HD-FDD is the same as the peak data rate of the terminal of the first type supporting FD-FDD.

In combination with some embodiments of the third aspect, in some embodiments, a plurality of terminals of the first type have a same peak data rate, and UL modulation orders and/or DL modulation orders supported by the plurality of terminals of the first type respectively are different from each other.

In combination with some embodiments of the third aspect, in some embodiments, a plurality of terminals of the first type have a same peak data rate, and the plurality of terminals of the first type supports different numbers of MIMO layers of a UL channel and/or different maximum numbers of MIMO layers of a DL channel.

According to a fourth aspect of the embodiments of the disclosure, a terminal is provided. The terminal includes at least one of a transceiving module or a processing module, in which the terminal is configured to implement the method according to the first aspect and the optional implementations of the first aspect.

According to a fifth aspect of the embodiments of the disclosure, a network device is provided. The network device includes at least one of a transceiving module or a processing module, in which the network device is configured to implement the method according to the second aspect and the optional implementations of the second aspect.

According to a sixth aspect of the embodiments of the disclosure, a terminal is provided. The terminal includes one or more processors, in which the terminal is configured to implement the method according to the first aspect and the optional implementations of the first aspect.

According to a seventh aspect of the embodiments of the disclosure, a network device is provided. The network device includes one or more processors, in which the network device is configured to implement the method according to the second aspect and the optional implementations of the second aspect.

According to an eighth aspect of the embodiments of the disclosure, a communication system is provided, including a terminal and a network device. The terminal is configured to implement the method according to the first aspect and the optional implementations of the first aspect, and the network device is configured to implement the method according to the second aspect and the optional implementations of the second aspect.

According to a ninth aspect of the embodiments of the disclosure, a storage medium is provided and stores instructions that, when run on a communication device, cause the communication device to perform the method described in the first aspect and the optional implementations of the first aspect as well as the second aspect and the optional implementations of the second aspect.

According to a tenth aspect of the embodiments of the disclosure, a program product is provided that, when executed by a communication device, causes the communication device to perform the method described in the first aspect and the optional implementations of the first aspect as well as the second aspect and the optional implementations of the second aspect.

According to an eleventh aspect of the embodiments of the disclosure, a computer program is provided that, when run on a computer, causes the computer to perform the method described in the first aspect and the optional implementations of the first aspect as well as the second aspect and the optional implementations of the second aspect.

According to a twelfth aspect of the embodiments of the disclosure, a chip or chip system is provided. The chip or chip system includes a processing circuit configured to perform the method described in the first aspect and the optional implementations of the first aspect as well as the second aspect and the optional implementations of the second aspect.

**It** may be understood that the aforesaid terminal, network device, communication system, storage medium, program product, computer program, and chip or chip system are all configured to implement the method proposed in the embodiments of the disclosure. Therefore, for the beneficial effects achievable thereby, reference may be made to the beneficial effects in the corresponding method, which are not repeated here.

The embodiments of the disclosure provide a method for processing information and an apparatus, a communication device, a communication system, and a storage medium. In some embodiments, the terms such as "method for processing information", "information processing method", and "communication method" may be used interchangeably; the terms such as "apparatus for processing information", "information processing apparatus", and "communication apparatus" may be used interchangeably; and the terms such as "information processing system" and "communication system" may be used interchangeably.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, optional implementations in a certain embodiment may be combined arbitrarily; furthermore, the embodiments may be combined arbitrarily. For example, some or all steps of different embodiments may be combined arbitrarily, and a certain embodiment may be combined arbitrarily with optional implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of" refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

In some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, the terms "apparatus" and "device" may be interpreted as either physical or virtual entities. Their names are not limited to those recorded in the embodiments, and in some cases, they may also be understood as "equipment", "device", "circuit", "network element", "node", "function", "unit", "section", "system", "network", "chip", "chip system", "entity", "subject" and the like.

In some embodiments, the term "network" may be interpreted as an apparatus included in a network (e.g., an access network device, a core network device, etc.).

In some embodiments, the terms "access network device (AN device)" may also be referred to as "radio access network device (RAN device)", "base station (BS)", "radio base station", "fixed station", and, in some embodiment, may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" and the like.

In some embodiments, the terms "terminal" or "terminal device" may also be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" and the like.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

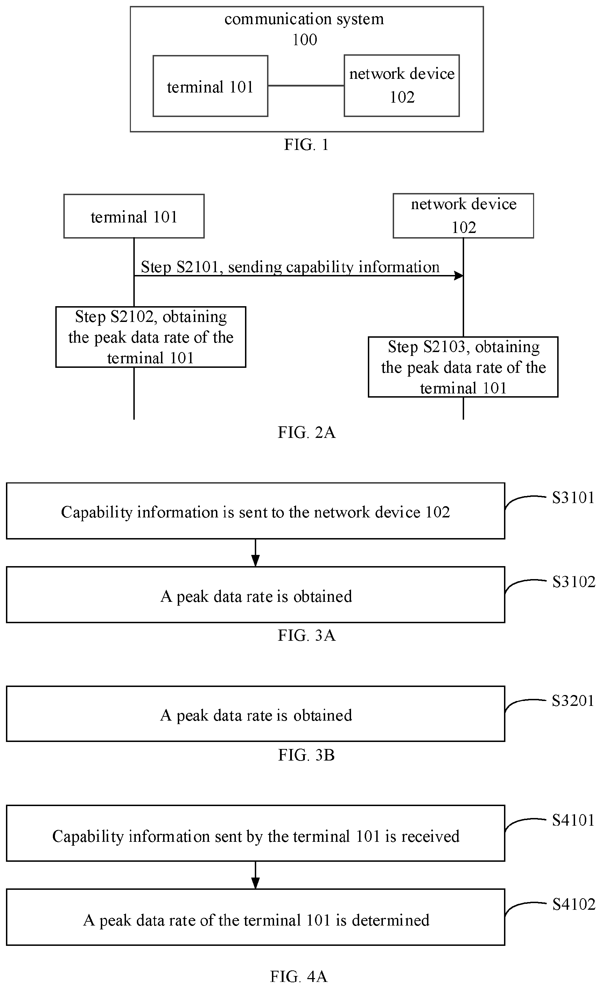

FIG. 1 is a schematic diagram of a communication system according to an embodiment of the disclosure.

As shown in FIG. 1, a communication system 100 may include a terminal 101 and a network device 102.

In some embodiments, the terminal 101 includes, for example, at least one of a mobile phone, a wearable device, an Internet of Things (IoT) device, a vehicle with communication functions, an intelligent vehicle, a Pad, a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 is, for example, a node or device that connects a terminal to a wireless network. The network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a wireless fidelity (Wi-Fi) system, but is not limited thereto.

In some embodiments, the technical solutions of the disclosure may be applicable to the open RAN architecture. In this case, interfaces between access network devices or within the access network device involved in the embodiments of the disclosure may be converted into internal interfaces of the open RAN, and procedures and information interaction between these internal interfaces may be implemented by software or programs.

In some embodiments, the access network device may consist of a central unit (CU) and a distributed unit (DU). The CU may also be referred to as a control unit. The CU-DU architecture enables protocol layers of the access network device to be separated. Functions of some protocol layers are subject to a centralized control of the CU, and functions of the remaining part or all of the protocol layers are distributed in the DU, which is centrally controlled by the CU. However, the disclosure is not limited thereto.

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1, or some entities in the communication system 100, but are not limited thereto. Each entity shown in FIG. 1 is an example. The communication system may include all or part of the entities in FIG. 1, or may also include other entities not shown in FIG. 1. The number and form of each entity are arbitrary. Connection relationships between entities are exemplary. Each entity may be unconnected or connected with each other, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

In the embodiments of the disclosure, the peak data rate of the terminal is associated with capabilities of the terminal.

In some embodiments, a maximum transmission data rate of an NR terminal may be determined according to the following formula:

$$\text{data rate (in Mbps)} = 10^{-6} \cdot \sum_{j=1}^{J}\left( v_{Layers}^{(j)} \cdot Q_m^{(j)} \cdot f^{(j)} \cdot R_{max} \cdot \frac{N_{PRB}^{BW^{(j)}} \cdot 12}{T_S^{\mu}} \cdot \left(1 - OH^{(j)}\right) \right)_\circ$$

Mbps is a transmission rate unit, i.e., megabits per second; J denotes a number of aggregated component carriers (CCs) in a band or in a band combination.

$$\mathrm{R}_{\max} = 948/1024.$$

For the j-th component carrier:

$v_{\mathrm{Layers}}^{(j)}$ is derived from a higher-layer parameter maxNumberMIMO-LayersPDSCH (a maximum number of MIMO layers for physical downlink shared channel (PDSCH)) for a DL, and higher-layer parameters maxNumberMIMO-LayersCB-PUSCH (a maximum number of MIMO layers for code block (CB)-based physical uplink shared channel (PUSCH)) and maxNumberMIMO-LayersNonCB-PUSCH (a maximum number of MIMO layers for non-CB-based PUSCH) for a UL, all of which are reported by the terminal based on a UE capability signaling. $Q_{\mathrm{m}}^{(j)}$ is derived from a higher-layer parameter supportedModulationOrderDL (supported DL modulation order) for DL maximum data rate calculation and a higher-layer parameter supportedModulationOrderUL (supported UL modulation order) for UL maximum data rate calculation, both of which are reported by the terminal based on the UE capability signaling. An actual modulation order supported by the terminal may be higher than the reported parameters.

$f^{(j)}$ is a scaling factor given by a higher-layer parameter scalingFactor, where the scaling factor may take values of 1, 0.8, 0.75, and 0.4, and this parameter is also reported by the terminal based on UE capabilities.

$\mu$ is a system parameter (numerology) whose value is associated with a sub-carrier spacing (SCS), and a corresponding cyclic prefix is controlled by a parameter cyclicPrefix (cyclic prefix). $T_S^{\mu}$ is a duration of an average orthogonal frequency division multiplexing (OFDM) symbol in one subframe with a system parameter $\mu$. For example,

$T_S^{\mu} = \frac{10^{-3}}{14 \cdot 2^{\mu}}$ , assuming that a cyclic prefix corresponding to $\mu$ a normal cyclic prefix. $N_{\mathrm{PRB}}^{\mathrm{BW}^{(j)}}$ is a maximum resource block (RB) allocation within a bandwidth $BW^{(j)}$ in a case where the system parameter is $\mu$, where $BW^{(j)}$ is a maximum bandwidth supported by the UE in the band or the band combination.

$OH^{(j)}$ denotes a overhead, which takes the following values:

0.14 for a DL frequency range FR1;
0.18 for a DL frequency range FR2;
0.08 for a UL frequency range FR1;
0.10 for a UL frequency range FR2.

As mentioned above, v, Q, f are all parameters associated with the UE capabilities, which may be transmitted by the terminal to the network device via a signaling related to UE capability reporting.

In some embodiments, the peak data rate of the terminal may be used to constrain a transmission block size (TBS) of a TB scheduled by the network device.

Specifically, the peak data rate may refer to a ratio of a sum of TBSs of all TBs scheduled for one terminal by the network device within one slot to a duration of the slot, which shall fall within a constraint range of the peak data rate.

In some embodiments, for an enhanced reduced capability (eRedCap) terminal, a number of RBs supported by a data channel of the eRedCap terminal is further reduced on a basis of an R17 RedCap design, and the peak rate is also further lowered accordingly. Therefore, it is necessary to redefine a method for determining the peak rate.

The method for processing information and an apparatus provided in the disclosure are described in detail below with reference to the accompanying drawings.

FIG. 2A is an interaction diagram of a method for processing information according to an embodiment of the disclosure. As shown in FIG. 2A, the embodiment of the disclosure relates to a method for processing information, and the method includes the following steps.

At step S2101, the terminal 101 sends capability information to the network device 102.

In some embodiments, the capability information indicates capabilities of the terminal 101.

In some embodiments, the capability information includes at least one of:

a maximum number of MIMO layers of a UL channel supported by the terminal 101;
a maximum number of MIMO layers of a DL channel supported by the terminal 101;
a UL modulation order supported by the terminal;
a DL modulation order supported by the terminal; or
a scaling factor.

In some embodiments, the maximum number of MIMO layers of the UL channel supported by the terminal 101 may be indicated by at least one of parameters maxNumberMIMO-LayersCB-PUSCH or maxNumberMIMO-Layers-

NonCB-PUSCH.

In some embodiments, the maximum number of MIMO layers of the DL channel supported by the terminal 101 may be indicated by a parameter maxNumberMIMO-LayersPDSCH.

In some embodiments, the UL modulation order supported by the terminal 101 may be indicated by a parameter supportedModulationOrderUL.

In some embodiments, the DL modulation order supported by the terminal 101 may be indicated by a parameter supportedModulationOrderDL.

In some embodiments, the scaling factor may be indicated by a parameter scalingFactor.

In some embodiments, there is no limitation on the name of the capability information, which may be, for example, "capability information", "terminal capability", "terminal capability information", "capabilities of the terminal of a first type", etc.

In some embodiments, a type of the terminal 101 is a first type or a second type.

In some embodiments, the terminal 101 of the first type may be an eRedCap terminal.

In some embodiments, the terminal 101 of the second type may be a non-eRedCap terminal.

In some embodiments, the terminal 101 of the first type may be a RedCap terminal.

In some embodiments, the terminal 101 of the second type may be a normal terminal.

In some embodiments, the type of the terminal 101 is the first type, and at least one piece of following information in the capability information is not applicable to the terminal 101 of the first type:

the UL modulation order supported by the terminal;
the DL modulation order supported by the terminal; or
the scaling factor.

In some embodiments, "not applicable to the terminal 101 of the first type" may mean that the capability information sent by the terminal 101 of the first type to the network device 102 does not include the at least one piece of above information, or that the capability information sent by the terminal 101 of the first type to the network device 102 includes the at least one piece of above information, but the at least one piece of above information is not used by the network device 102 to determine a peak data rate of the terminal 101.

In some embodiments, the type of the terminal 101 is the second type, and the capability information is further used by the network device 102 to determine the peak data rate of the terminal 101 of the second type. That is to say, the network device 102 may calculate and determine the peak data rate of the terminal 101 of the second type based on the capability information.

In some embodiments, the type of the terminal 101 is the first type, and the capability information is not used by the network device 102 to determine the peak data rate of the terminal 101 of the first type. That is to say, the network device 102 does not calculate and determine the peak data rate of the terminal 101 of the first type based on the capability information.

At step S2102, the terminal 101 obtains the peak data rate of the terminal 101.

In some embodiments, the type of the terminal 101 is the first type, and the peak data rate is stipulated by a protocol. The terminal 101 of the first type may obtain the peak data rate stipulated by the protocol.

In some embodiments, the terminal 101 of the first type may be, for example, the eRedCap terminal.

In some embodiments, the terminal 101 of the first type may be, for example, the RedCap terminal.

In some embodiments, the peak data rate may be one or more values stipulated by the protocol.

In some embodiments, the type of the terminal 101 is the second type, and the peak data rate is determined based on the capability information of the terminal 101 of the second type.

Further, the terminal 101 may perform a subsequent data transmission based on the obtained peak data rate, and the network device 102 may schedule resources of the terminal 101 based on the peak data rate.

In some embodiments, the peak data rate corresponding to a UL channel of the terminal of the first type as stipulated by the protocol may be different from the peak data rate corresponding to a DL channel of the terminal of the first type.

In some embodiments, the peak data rate corresponding to the UL channel of the terminal of the first type as stipulated by the protocol may be the same as the peak data rate corresponding to the DL channel of the terminal of the first type.

In some embodiments, the peak data rate of the terminal of the first type supporting HD-FDD as stipulated by the protocol may be the same as the peak data rate of the terminal of the first type supporting FD-FDD.

In some embodiments, the peak data rate of the terminal of the first type supporting the HD-FDD as stipulated by the protocol may also be different from the peak data rate of the terminal of the first type supporting the FD-FDD.

In some embodiments, peak data rates of the terminals of the first type supporting different UL modulation orders and/or supporting different DL modulation orders as stipulated by the protocol may be the same. That is to say, the protocol may stipulate that a plurality of terminals of the first type have a same peak data rate, where UL modulation orders and/or DL modulation orders supported by the plurality of terminals of the first type respectively are different from each other.

In some embodiments, the peak data rates of the terminals of the first type supporting different UL modulation orders and/or supporting different DL modulation orders as stipulated by the protocol may also be different.

In some embodiments, the terminals of the first type supporting different UL modulation orders may have the same peak data rate.

In some embodiments, the terminals of the first type supporting different UL modulation orders may have different peak data rates.

In some embodiments, the terminals of the first type supporting different DL modulation orders may have the same peak data rate.

In some embodiments, the terminals of the first type supporting different DL modulation orders may have different peak data rates.

In some embodiments, the terminals of the first type supporting at least one DL modulation order in a first set may have a same peak data rate, and the terminals of the first type supporting at least one DL modulation order in a second set may have a same peak data rate, with the two above peak data rates being different, and so on. The embodiments of the disclosure do not impose specific limitations herein.

In some embodiments, peak data rates of the terminals of the first type supporting different numbers of MIMO layers of UL channels and/or supporting different numbers of MIMO layers of DL channels as stipulated by the protocol may be the same. That is to say, the protocol may stipulate that a plurality of terminals of the first type have a same peak data rate, where the numbers of MIMO layers of UL channels and/or the numbers of MIMO layers of DL channels supported by the plurality of terminals of the first type respectively are different from each other.

In some embodiments, the peak data rates of the terminals of the first type supporting different numbers of MIMO layers of UL channels and/or supporting different numbers of MIMO layers of DL channels as stipulated by the protocol may also be different.

In some embodiments, the terminals of the first type supporting different numbers of UL MIMO layers may have the same peak data rate.

In some embodiments, the terminals of the first type supporting different numbers of UL MIMO layers may have different peak data rates.

In some embodiments, the terminals of the first type supporting different numbers of DL MIMO layers may have the same peak data rate.

In some embodiments, the terminals of the first type supporting different numbers of DL MIMO layers may have different peak data rates.

In some embodiments, the terminals of the first type supporting at least one number of UL MIMO layers in a first set may have a same peak data rate, and the terminals of the first type supporting at least one number of UL MIMO layers in a second set may have a same peak data rate, with the two above peak data rates being different, and so on. The embodiments of the disclosure do not impose specific limitations herein.

At step S2103, the network device 102 obtains the peak data rate of the terminal 101.

In some embodiments, the type of the terminal 101 is the first type, and the peak data rate is stipulated by a protocol. The terminal 101 of the first type may obtain the peak data rate stipulated by the protocol.

In some embodiments, the terminal 101 of the first type may be, for example, the eRedCap terminal.

In some embodiments, the terminal 101 of the first type may be, for example, the RedCap terminal.

In some embodiments, the peak data rate may be one or more values stipulated by the protocol.

In some embodiments, the type of the terminal 101 is the second type, and the peak data rate is determined based on the capability information of the terminal 101 of the second type.

Further, the terminal 101 may perform a subsequent data transmission based on the obtained peak data rate, and the network device 102 may schedule resources of the terminal 101 based on the peak data rate.

In some embodiments, the peak data rate corresponding to the UL channel of the terminal of the first type as stipulated by the protocol may be different from the peak data rate corresponding to the DL channel of the terminal of the first type.

In some embodiments, the peak data rate corresponding to the UL channel of the terminal of the first type as stipulated by the protocol may be the same as the peak data rate corresponding to the DL channel of the terminal of the first type.

In some embodiments, the peak data rate of the terminal of the first type supporting the HD-FDD as stipulated by the protocol may be the same as the peak data rate of the terminal of the first type supporting the FD-FDD.

In some embodiments, the peak data rate of the terminal of the first type supporting the HD-FDD as stipulated by the protocol may also be different from the peak data rate of the terminal of the first type supporting the FD-FDD.

In some embodiments, the peak data rates of the terminals of the first type supporting different UL modulation orders and/or supporting different DL modulation orders as stipulated by the protocol may be the same. That is to say, the protocol may stipulate that a plurality of terminals of the first type have the same peak data rate, where UL modulation orders and/or DL modulation orders supported by the plurality of terminals of the first type respectively are different from each other.

In some embodiments, the peak data rates of the terminals of the first type supporting different UL modulation orders and/or supporting different DL modulation orders as stipulated by the protocol may also be different.

In some embodiments, the terminals of the first type supporting different UL modulation orders may have the same peak data rate.

In some embodiments, the terminals of the first type supporting different UL modulation orders may have different peak data rates.

In some embodiments, the terminals of the first type supporting different DL modulation orders may have the same peak data rate.

In some embodiments, the terminals of the first type supporting different DL modulation orders may have different peak data rates.

In some embodiments, the terminals of the first type supporting at least one DL modulation order in a first set may have a same peak data rate, and the terminals of the first type supporting at least one DL modulation order in a second set may have a same peak data rate, with the two above peak data rates being different, and so on. The embodiments of the disclosure do not impose specific limitations herein.

In some embodiments, peak data rates of the terminals of the first type supporting different numbers of MIMO layers of UL channels and/or supporting different numbers of MIMO layers of DL channels as stipulated by the protocol may be the same. That is to say, the protocol may stipulate that a plurality of terminals of the first type have the same peak data rate, where the numbers of MIMO layers of UL channels and/or the numbers of MIMO layers of DL channels supported by the plurality of terminals of the first type respectively are different from each other.

In some embodiments, the peak data rates of the terminals of the first type supporting different numbers of MIMO layers of UL channels and/or supporting different numbers of MIMO layers of DL channels as stipulated by the protocol may also be different.

In some embodiments, the terminals of the first type supporting different numbers of UL MIMO layers may have the same peak data rate.

In some embodiments, the terminals of the first type supporting different numbers of UL MIMO layers may have different peak data rates.

In some embodiments, the terminals of the first type supporting different numbers of DL MIMO layers may have the same peak data rate.

In some embodiments, the terminals of the first type supporting different numbers of DL MIMO layers may have different peak data rates.

In some embodiments, the terminals of the first type supporting at least one number of UL MIMO layers in a first set may have a same peak data rate, and the terminals of the first type supporting at least one number of UL MIMO layers in a second set may have a same peak data rate, with the two above peak data rates being different, and so on. The embodiments of the disclosure do not impose specific limitations herein.

In some embodiments, the type of the terminal 101 is the second type, and the peak data rate is determined based on the capability information of the terminal 101 of the second type.

In some embodiments, the peak data rate of the terminal 101 of the second type:

$$\text{peak data rate} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW^{(j)}} \cdot 12}{T_S^{\mu}} \cdot \left(1 - OH^{(j)}\right) \right)。$$

J denotes a number of aggregated CCs in a band or in a band combination.

$$R_{max} = 948/1024.$$

For the j-th component carrier:

$v_{Layers}^{(j)}$ is a higher-layer parameter maxNumberMIMO-LayersPDSCH (a maximum number of MIMO layers for PDSCH) for a DL, and higher-layer parameters maxNumberMIMO-LayersCB-PUSCH (a maximum number of MIMO layers for CB-based PUSCH) and maxNumberMIMO-LayersNonCB-PUSCH (a maximum number of MIMO layers for non-CB-based PUSCH) for a UL reported by the terminal 101 in the capability information. $Q_m^{(j)}$ is a higher-layer parameter supportedModulationOrderDL (supported DL modulation order) for the DL and a higher-layer parameter supportedModulationOrderUL (supported UL modulation order) for the UL reported by the terminal 101 in the capability information. An actual modulation order supported by the terminal 101 may be higher than the reported parameters.

$f^{(j)}$ is a scaling factor given by a higher-layer parameter scalingFactor reported by the terminal 101 in the capability information, where the scaling factor may take values of 1, 0.8, 0.75, and 0.4.

$\mu$ is a system parameter (numerology) whose value is associated with an SCS, and a corresponding cyclic prefix is controlled by a parameter cyclicPrefix (cyclic prefix). $T_S^{\mu}$ is a duration of an average OFDM symbol in one subframe with a system parameter $\mu$. For example, $T_S^{\mu} = \frac{10^{-3}}{14 \cdot 2^{\mu}}$, assuming that a cyclic prefix corresponding to $\mu$ a normal cyclic prefix.

$N_{PRB}^{BW^{(j)}}$ is a maximum RB allocation within a bandwidth $BW^{(j)}$ in a case where the system parameter is $\mu$, where $BW^{(j)}$ is a maximum bandwidth supported by the UE in the band or the band combination.

$OH^{(j)}$ denotes a overhead, which takes the following values:

0.14 for a DL frequency range FR1;
0.18 for a DL frequency range FR2;
0.08 for a UL frequency range FR1;
0.10 for a UL frequency range FR2.

In some embodiments, the names of information and the like are not limited to those recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program" and "chip" are interchangeable with each other.

In some embodiments, terms such as "UL", "UL channel" and "physical UL" are interchangeable with each other; terms such as "DL", "DL channel" and "physical DL" are interchangeable with each other; terms such as "side", "sidelink", "sidelink communication", "direct connection", "direct link", "direct communication" and "direct link communication" are interchangeable with each other.

In some embodiments, terms such as "downlink control information (DCI)", "DL assignment", "DL DCI", "UL grant" and "UL DCI" are interchangeable with each other.

In some embodiments, terms such as "PDSCH" and "DL data" are interchangeable with each other; terms such as "PUSCH" and "UL data" are interchangeable with each other.

In some embodiments, terms such as "radio", "wireless", "radio access network (RAN)", "access network (AN)" and "RAN-based" are interchangeable with each other.

In some embodiments, terms such as "RB", "physical resource block (PRB)", "SCG", "resource element group (REG)", "PRB pair", "RB pair", "resource element (RE)" and "sub-carrier" are interchangeable with each other.

In some embodiments, terms such as "obtain", "acquire", "gain", "receive", "transmit", "bidirectional transmission" and "transmit and/or receive" are interchangeable with each other, which may be interpreted as a plurality of meanings including receiving from other entities, acquiring from protocols, obtaining from higher layers, obtaining through self-processing, autonomous implementation, etc.

In some embodiments, terms such as "send", "transmit", "report", "deliver", "transfer", "bidirectional transmission" and "transmit and/or receive" are interchangeable with each other.

In some embodiments, terms such as "certain", "preset", "preconfigured", "set", "indicated", "a certain" "any" and "first" are interchangeable with each other. Phrases such as "certain A", "preset A", "preconfigured A", "set A", "indicated A", "a certain A", "any A" and "first A" may be interpreted as A predefined in protocols or the like, or A obtained through setting, configuration, indication or the like, or as specific A, a certain A, any A, first A, etc., but are not limited thereto.

In some embodiments, determination or judgment may be performed by a value (0 or 1) represented by 1 bit, by a boolean value represented by true or false, or by comparison of numerical values (e.g., comparison with a preset value), but is not limited thereto.

In some embodiments, "not expected to receive" may be interpreted as not receiving on time-domain resources and/or frequency-domain resources, or as not performing subsequent processing on data after receiving the data. "Not expected to send" may be interpreted as not sending, or as sending but not expecting a respond from a receiver to a sent content.

The communication method involved in the embodiments of the disclosure may include at least one of steps S2101 to S2103. For example, step S2101 may be implemented as an independent embodiment, step S2102 may be implemented as an independent embodiment, step S2103 may be implemented as an independent embodiment, steps S2101 + S2102 may be implemented as an independent embodiment, steps S2101 + S2103 may be implemented as an independent embodiment, steps S2102 + S2103 may be implemented as an independent embodiment, steps S2101 + S2102 + S2103 may be implemented as an independent embodiment, etc., but are not limited thereto.

In some embodiments, steps S2101 and S2102 may be executed in an exchanged order or simultaneously; steps S2101 and S2103 may be executed in an exchanged order or simultaneously; steps S2102 and S2103 may be executed in an exchanged order or simultaneously.

In some embodiments, step S2101 is optional, and one or more of these steps may be omitted or replaced in different embodiments.

In some embodiments, step S2102 is optional, and one or more of these steps may be omitted or replaced in different embodiments.

In some embodiments, step S2103 is optional, and one or more of these steps may be omitted or replaced in different embodiments.

In some embodiments, reference may be made to other optional implementations recorded before or after the specification corresponding to FIG. 2A.

FIG. 3A is a schematic flowchart of a method for processing information according to an embodiment of the disclosure. As shown in FIG. 3A, the embodiment of the disclosure relates to a method for processing information, where the method is executed by the terminal and includes the following steps.

At step S3101, capability information is sent to the network device 102.

For optional implementations of step S3101, reference may be made to the optional implementations of step S2101 in FIG. 2A and other relevant parts in the embodiments related to FIG. 2A, which are not repeated herein.

In some embodiments, the terminal 101 transmits the capability information to the network device 102, but it is not limited thereto, and the capability information may also be transmitted to other entities.

In some embodiments, the capability information is configured for the network device 102 to determine the peak data rate of the terminal 101 of the second type. For optional implementations thereof, reference may be made to the optional implementations of step S2103 in FIG. 2A and other relevant parts in the embodiments related to FIG. 2A, which are not repeated herein.

In some embodiments, the capability information is not used to determine the peak data rate of the terminal 101 of the first type, and the peak data rate of the terminal 101 of the first type is stipulated by the protocol. For optional implementations thereof, reference may be made to the optional implementations of step S2103 in FIG. 2A and other relevant parts in the embodiments related to FIG. 2A, which are not repeated herein.

At step S3102, a peak data rate is obtained.

For optional implementations of step S3102, reference may be made to the optional implementations of step S2102 in FIG. 2A and other relevant parts in the embodiments related to FIG. 2A, which are not repeated herein.

In some embodiments, step S3102 is omitted, and the terminal 101 independently implements a function indicated by the peak data rate, or the above function is default.

The communication method involved in the embodiments of the disclosure may include at least one of steps S3101 to S3102. For example, step S3101 may be implemented as an independent embodiment, step S3102 may be implemented as an independent embodiment, steps S3101 + S3102 may be implemented as an independent embodiment, etc., but it is not limited thereto.

In some embodiments, steps S3101 and S3102 may be executed in an exchanged order or simultaneously.

In some embodiments, step S3101 is optional, and one or more of these steps may be omitted or replaced in different embodiments.

In some embodiments, step S3102 is optional, and one or more of these steps may be omitted or replaced in different embodiments.

FIG. 3B is a schematic flowchart of a method for processing information according to an embodiment of the disclosure. As shown in FIG. 3B, the embodiment of the disclosure relates to a method for processing information, where the method is executed by the terminal 101 and includes the following step.

At step S3201, a peak data rate is obtained.

For optional implementations of step S3201, reference may be made to the optional implementations of step S2102 in FIG. 2A and step S3102 in FIG. 3A, as well as other relevant parts in the embodiments related to FIG. 2A and FIG. 3A, which are not repeated herein.

FIG. 4A is a schematic flowchart of a method for processing information according to an embodiment of the disclosure. As shown in FIG. 4A, the embodiment of the disclosure relates to a method for processing information, where the method is executed by the network device 102 and includes the following steps.

At step S4101, capability information sent by the terminal 101 is received.

For optional implementations of step S4101, reference may be made to the optional implementations of step S2101 in FIG. 2A and other relevant parts in the embodiments related to FIG. 2A, which are not repeated herein.

In some embodiments, the network device 102 receives first information transmitted by the terminal 101, but it is not limited thereto, and may also receive capability information transmitted by other entities.

In some embodiments, the above capability information is used to determine the peak data rate of the terminal 101 of the second type.

In some embodiments, the above capability information is not used to determine the peak data rate of the terminal 101 of the first type, and the peak data rate of the terminal 101 of the first type is stipulated by the protocol. For optional implementations thereof, reference may be made to the optional implementations of step S2102 in FIG. 2A and other relevant parts in the embodiments related to FIG. 2A, which are not repeated herein.

At step S4102, a peak data rate of the terminal 101 is determined.

For optional implementations of step S4102, reference may be made to the optional implementations of step S2103 in FIG. 2A and other relevant parts in the embodiments related to FIG. 2A, which are not repeated herein.

The communication method involved in the embodiments of the disclosure may include at least one of steps S4101 to S4102. For example, step S4101 may be implemented as an independent embodiment, step S4102 may be implemented as an independent embodiment, steps S4101 + S4102 may be implemented as an independent embodiment, etc., but it is not limited thereto.

In some embodiments, steps S4101 and S4102 may be executed in an exchanged order or simultaneously.

In some embodiments, step S4101 is optional, and one or more of these steps may be omitted or replaced in different embodiments.

In some embodiments, step S4102 is optional, and one or more of these steps may be omitted or replaced in different embodiments.

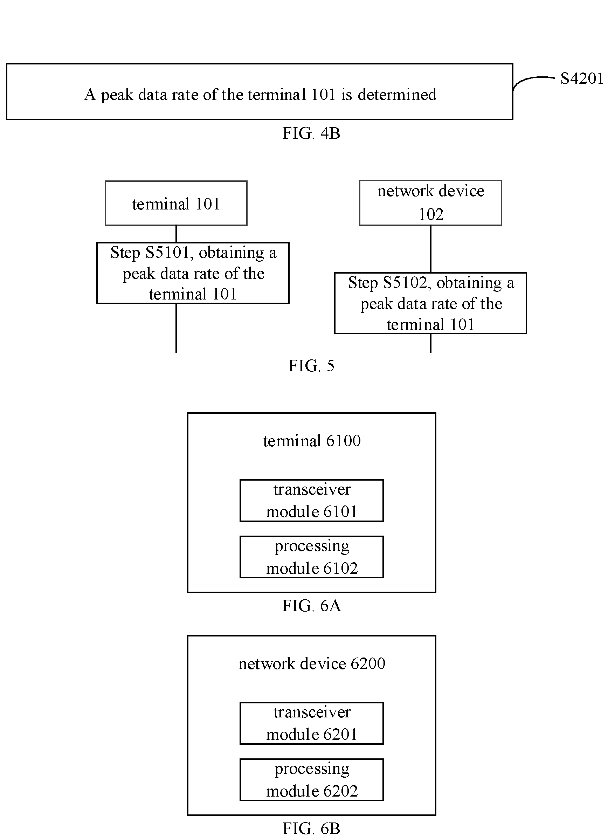

FIG. 4B is a schematic flowchart of a method for processing information according to an embodiment of the disclosure. As shown in FIG. 4B, the embodiment of the disclosure relates to a method for processing information, where the method is executed by the network device 102 and includes the following step.

At step S4201, a peak data rate of the terminal 101 is determined.

For optional implementations of step S4201, reference may be made to the optional implementations of step S2103 in FIG. 2A and step S4102 in FIG. 4A, as well as other relevant parts in the embodiments related to FIG. 2A and FIG. 4A, which are not repeated herein.

In some embodiments, the type of the terminal 101 is the second type, and the peak data rate of the terminal 101 of the second type is determined based on the capability information transmitted by the terminal 101. For optional implementations thereof, reference may be made to the optional implementations of step S2101 in FIG. 2A and other relevant parts in the embodiments related to FIG. 2A, which are not repeated herein.

FIG. 5 is a schematic flowchart of a method for processing information according to an embodiment of the disclosure. As shown in FIG. 5, the method involved in the embodiment of the disclosure is applied to the communication system 100 and includes the following steps.

At step S5101, a terminal determines a peak data rate of the terminal, where a type of the terminal is a first type, and the peak data rate is stipulated by a protocol.

At step S5102, a network device determines the peak data rate of the terminal, where the type of the terminal is the first type, and the peak data rate is stipulated by the protocol.

For optional implementations of steps S5101 and S5102, reference may be made to the steps in any one or more of the above embodiments shown in FIGS. 2A-2B, 3A-3B, and 4A-4B, as well as other relevant parts in the embodiments related to FIGS. 2A-2B, 3A-3B, and 4A-4B.

In some embodiments, the above method may include the methods described in the embodiments of the communication system side, the terminal side, and the network device side, which are not repeated herein.

The communication method involved in the embodiments of the disclosure may include at least one of steps S5101 to S5102. For example, step S5101 may be implemented as an independent embodiment, step S5102 may be implemented as an independent embodiment, steps S5101 + S5102 may be implemented as an independent embodiment, etc., but it is not limited thereto.

In some embodiments, steps S5101 and S5102 may be executed in an exchanged order or simultaneously.

In some embodiments, step S5101 is optional, and one or more of these steps may be omitted or replaced in different embodiments.

In some embodiments, step S5102 is optional, and one or more of these steps may be omitted or replaced in different embodiments.

In this implementation or embodiment, without conflicting, each step may be implemented independently, combined arbitrarily, or executed in an exchanged order. Optional modes or optional examples may be combined arbitrarily, and may also be combined arbitrarily with any step in other implementations or embodiments.

The following is an exemplary description of the methods described in the above embodiments.

In the embodiments of the disclosure, the protocol may directly specify a specific value of the peak data rate of the eRedCap terminal.

In some embodiments, different values may be defined for UL and DL peak rates of the eRedCap terminal.

In some embodiments, the eRedCap terminal supporting HD-FDD and the eRedCap terminal supporting FD-FDD may have the same peak rate value.

In some embodiments, eRedCap terminals supporting different modulation orders may have the same peak rate value.

In some embodiments, eRedCap terminals supporting different MIMO layers may have the same peak rate value.

In some embodiments, terminal capability-related parameters such as supportedModulationOrderUL, supportedModulationOrderDL, and scalingFactor are only configured for terminal capability reporting for the terminal of the first type, and are not applicable to terminal capability reporting for the terminal of the second type. The terminal of the second type refer to the eRedCap terminal, and the terminal of the first type refer to the non-eRedCap terminal.

As an example, for the parameter supportedModulationOrderUL, the protocol may specify that this capability is not applicable to the eRedCap terminal (or called eRedCap UE).

As an example, for the parameter supportedModulationOrderDL, the protocol may specify that this capability is not applicable to the eRedCap terminal.

As an example, for the parameter scalingFactor, the protocol may specify that this capability is not applicable to the eRedCap terminal.

In some embodiments, both the terminal of the first type and the terminal of the second type may report a maximum number of UL or DL MIMO layers supported by the terminal via parameters such as maxNumberMIMO-LayersPDSCH, maxNumberMIMO-LayersCB-PUSCH, and maxNumberMIMO-LayersNonCB-PUSCH.

In some embodiments, for the terminal of the first type, the above parameters may also be configured for determining the peak rate;
In some embodiments, for UEs of the second type, the above parameters may not be configured for determining the peak rate.

The embodiments of the disclosure further provide an apparatus for implementing any of the methods described above. For example, an apparatus is provided, which includes units or modules configured to implement each step performed by the terminal in any of the methods described above. For another example, another apparatus is provided, which includes units or modules configured to implement each step performed by the network device (e.g., access network device, core network function node, core network device, etc.) in any of the methods described above.

It should be understood that the division of units or modules in the above apparatus is merely a logical function division. In actual implementation, all or part of units or modules may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large number of logic gate circuits, and the connection relationships between the logic gate circuits are configured through configuration files to implement the functions of some or all of the above units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an ASIC or a PLD, such as an FPGA. In a reconfigurable hardware circuit, the process in which the processor loads a configuration file to implement hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

FIG. 6A is a schematic diagram of a terminal according to an embodiment of the disclosure. As shown in FIG. 6A, a terminal 6100 may include at least one of a transceiver module 6101, a processing module 6102, and the like. In some embodiments, the above processing module is configured to determine the peak data rate of the terminal, where the type of the terminal is the first type, and the peak data rate is stipulated by the protocol. In some embodiments, the above transceiver module is configured to execute at least one of the communication steps such as transmission and/or reception (e.g., step S2101, but not limited thereto) performed by the terminal 101 in any of the methods described above, which is not repeated herein. In some embodiments, the above processing module is configured to execute at least one of the other steps (e.g., step S2102, step S2103, but not limited thereto) performed by the terminal 101 in any of the methods described above, which is not repeated herein.

FIG. 6B is a schematic diagram of a network device according to an embodiment of the disclosure. As shown in FIG. 6B, a network device 6200 may include at least one of a transceiver module 6201, a processing module 6202, and the like. In some embodiments, the above processing module is configured to determine the peak data rate of the terminal, where the type of the terminal is the first type, and the peak data rate is stipulated by the protocol. In some embodiments, the above transceiver module is configured to execute at least one of the communication steps such as transmission and/or reception (e.g., step S2101, but not limited thereto) performed by the network device 102 in any of the methods described above, which is not repeated herein. In some embodiments, the above processing module is configured to execute at least one of the other steps (e.g., step S2102, step S2103, but not limited thereto) performed by the network device 102 in any of the methods described above, which is not repeated herein.

In some embodiments, the transceiver module may include a transmitting module and/or a receiving module, where the transmitting module and the receiving module may be separate or integrated together. In some embodiments, the transceiver module is interchangeable with a transceiver.

In some embodiments, the processing module may be a single module or include a plurality of sub-modules. In some embodiments, the plurality of sub-modules respectively execute all or part of the steps to be performed by the processing module. In some embodiments, the processing module is interchangeable with a processor.

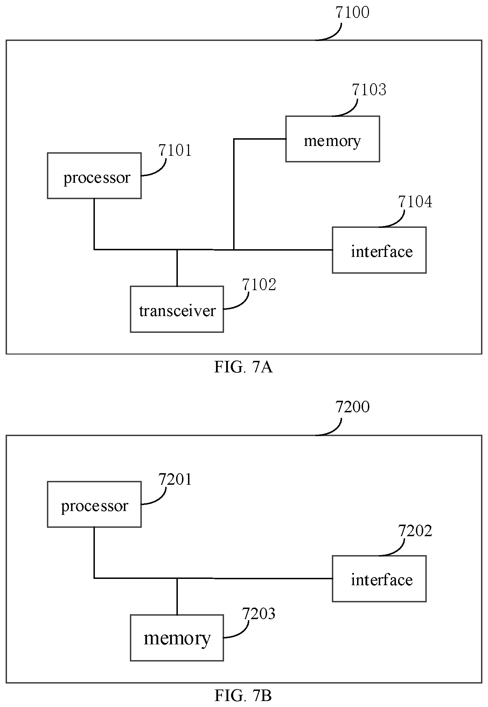

Fig. 7A is a schematic diagram of a communication device 7100 provided in an embodiment of the disclosure. The communication device 7100 may be a network device (e.g., an access network device, a core network device, etc.), a terminal (e.g., a user equipment, etc.), a chip, chip system, processor or the like configured to support the network device in implementing any of the foregoing methods, or a chip, chip system, processor or the like configured to support the terminal in implementing any of the foregoing methods for processing information. The communication device 7100 may be configured to implement the methods for processing information described in the foregoing method embodiments, and for details, reference may be made to the descriptions in the foregoing method embodiments.

As shown in Fig. 7A, the communication device 7100 includes one or more processors 7101. The processor 7101 may be a general-purpose processor, a special-purpose processor, or the like, for example, a baseband processor or a CPU. The baseband processor may be configured to process communication protocols and communication data, while the CPU may be configured to control the communication apparatus (e.g., base station, baseband chip, terminal, terminal device chip, DU, CU, etc.), execute programs, and process program data. In some embodiments, the communication device 7100 is configured to implement any of the methods described above. In some embodiments, the one or more processors 7101 are configured to invoke instructions to cause the communication device 7100 to execute any of the methods described above.

In some embodiments, the communication device 7100 further includes one or more transceivers 7102. Where the communication device 7100 includes one or more transceivers 7102, the transceiver 7102 executes at least one of the communication steps such as transmission and/or reception (e.g., step S2101, but not limited thereto) in the above methods, and the processor 7101 executes at least one of the other steps (e.g., step S2102, step S2103, but not limited thereto). In alternative embodiments, the transceiver may include a receiver and/or a transmitter, which may be separate components or integrated into a single unit. In some embodiments, terms such as transceiver, transceiving unit, transceiver device, transceiving circuit, interface circuit, and interface are interchangeable with each other; terms such as transmitter, transmitting unit, transmitter device, and transmitting circuit are interchangeable with each other; terms such as receiver, receiving unit, receiver device, and receiving circuit are interchangeable with each other.

In some embodiments, the communication device 7100 further includes one or more memories 7103 for storing data. In some embodiments, all or part of the memory 7103 may also be disposed outside the communication device 7100. In alternative embodiments, the communication device 7100 may include one or more interface circuits 7104. In some embodiments, the interface circuit 7104 is connected to the memory 7102, and the interface circuit 7104 may be configured to receive data from the memory 7102 or other devices, and to send data to the memory 7102 or other apparatuses. For example, the interface circuit 7104 may read data stored in the memory 7102 and transmit the data to the processor 7101.

The communication device 7100 described in the foregoing embodiments may be a network device or a terminal, but the scope of the communication device 7100 described in the disclosure is not limited thereto, and the structure of the communication device 7100 may not be restricted by that shown in Fig. 7A. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

FIG. 7B is a schematic diagram of a chip 7200 according to an embodiment of the disclosure. In cases where the communication device 7100 may be a chip or a chip system, reference may be made to the schematic diagram of the chip 7200 shown in FIG. 7B, but it is not limited thereto.

The chip 7200 includes one or more processors 7201. The chip 7200 is configured to implement any of the methods described above.

In some embodiments, the chip 7200 further includes one or more interface circuits 7202. In some embodiments, terms such as interface circuit, interface, and transceiver pin are interchangeable with each other. In some embodiments, the chip 7200 further includes one or more memories 7203 for storing data. In some embodiments, all or part of the memory 7203 may be disposed outside the chip 7200. In some embodiments, the interface circuit 7202 is connected to the memory 7203, and the interface circuit 7202 may be configured to receive data from the memory 7203 or other apparatuses, and to send data to the memory 7203 or other apparatuses. For example, the interface circuit 7202 may read data stored in the memory 7203 and transmit the data to the processor 7201.

In some embodiments, the interface circuit 7202 executes at least one of the communication steps such as transmission and/or reception (e.g., step S2101, step S2102, step S2201, step S2202, but not limited thereto) in the above methods. The interface circuit 7202 executing communication steps such as transmission and/or reception in the above methods refers to, for example, the interface circuit 7202 executing a data interaction between the processor 7201, the chip 7200, the memory 7203, or a transceiver component. In some embodiments, the processor 7201 executes at least one of the other steps.

Modules and/or components described in the various embodiments such as virtual apparatuses, physical apparatuses, and chips may be combined or separated arbitrarily as appropriate. In some embodiments, part or all of the steps may also be executed collaboratively by a plurality of modules and/or components, which is not limited herein.

The disclosure further provides a storage medium on which instructions are stored. When the instructions are run on the communication device 7100, the communication device 7100 is caused to execute any of the above methods. In some embodiments, the storage medium is an electronic storage medium. In some embodiments, the storage medium is a computer-readable storage medium, but it is not limited thereto, and may also be a storage medium readable by other apparatuses. In some embodiments, the storage medium is a non-transitory storage medium, but it is not limited thereto, and may also be a transitory storage medium.

The disclosure further provides a program product. When the program product is executed by the communication device 7100, the communication device 7100 is caused to execute any of the above methods. In some embodiments, the program product is a computer program product.

The disclosure further provides a computer program which, when run on a computer, enables the computer to perform any of the above methods.

In the above embodiments, implementation may be accomplished in whole or in part by software, hardware, firmware, or any combination thereof. When implemented by software, the implementation may be in the form of a computer program product in whole or in part. The computer program product includes one or more computer programs. When the computer programs are loaded and executed on a computer, the processes or functions described in the embodiments of the disclosure are generated in whole or in part. The computer may be a general-purpose computer, a special-purpose computer, a computer network, or another programmable device. The computer programs may be stored in a computer-readable storage medium or transmitted from one computer-readable storage medium to another. For example, the computer programs may be transmitted from a website, a computer, a server, or a data center to another website, computer, server, or data center via a wired (e.g., coaxial cable, optical fiber, digital subscriber line (DSL)) or wireless (e.g., infrared, wireless, microwave, etc.) means. The computer-readable storage medium may be any available medium that may be accessed by a computer, or a data storage device such as a server or data center integrating one or more available media. The available media may be magnetic media (e.g., a floppy disk, a hard disk, a magnetic tape), optical media (e.g., a high-density digital video disc (DVD)), or semiconductor media (e.g., a solid state disk (SSD)), etc.

Those of ordinary skill in the art may appreciate that units and algorithmic steps of the examples described in conjunction with the embodiments disclosed herein may be implemented by electronic hardware, or a combination of computer software and electronic hardware. Whether such functions are executed in hardware or software depends on the specific application and design constraints of the technical solution. Skilled artisans may implement the described functions using different methods for each specific application, but such implementations shall not be deemed to be beyond the scope of the disclosure.

Those skilled in the art can clearly understand that, for the convenience and conciseness of description, the specific working processes of the systems, devices, and units described above may refer to the corresponding processes in the foregoing method embodiments, and details are not repeated herein.

The foregoing is merely specific implementations of the disclosure, but the protection scope of the disclosure is not limited thereto. Any person skilled in the art who is familiar with the technical field can easily conceive of changes or substitutions within the technical scope disclosed by the disclosure, which shall all fall within the protection scope of the disclosure. Therefore, the protection scope of the disclosure shall be subject to the protection scope defined by the claims.

**Claims**

1. A method for processing information, performed by a terminal, comprising:

   determining a peak data rate of the terminal,
   wherein a type of the terminal is a first type, and the peak data rate is stipulated by a protocol.

2. The method according to claim 1, further comprising:

   sending capability information of the terminal to a network device,
   wherein the capability information comprises at least one of:

      a maximum number of multiple-input multiple-output (MIMO) layers of an uplink (UL) channel supported by the terminal;
      a maximum number of MIMO layers of a downlink (DL) channel supported by the terminal;
      a UL modulation order supported by the terminal;
      a DL modulation order supported by the terminal; or
      a scaling factor.

3. The method according to claim 2, wherein at least one piece of following information in the capability information is not applicable to the terminal of the first type:

   the UL modulation order supported by the terminal;
   the DL modulation order supported by the terminal; or
   the scaling factor.

4. The method according to claim 2, wherein the capability information is further used to determine the peak data rate of a terminal of a second type.

5. The method according to any one of claims 1 to 4, wherein the peak data rate corresponding to a UL channel of the terminal of the first type is the same as or different from the peak data rate corresponding to a DL channel of the terminal of the first type.

6. The method according to any one of claims 1 to 4, wherein the peak data rate of the terminal of the first type supporting half duplex (HD) frequency division duplex (FDD) is the same as the peak data rate of the terminal of the first type supporting full duplex (FD) FDD.

7. The method according to any one of claims 1 to 4, wherein a plurality of terminals of the first type have a same peak data rate, and UL modulation orders and/or DL modulation orders supported by the plurality of terminals of the first type respectively are different from each other.

8. The method according to any one of claims 1 to 4, wherein a plurality of terminals of the first type have a same peak data rate, and numbers of MIMO layers of UL channels and/or numbers of MIMO layers of DL channels supported by the plurality of terminals of the first type respectively are different from each other.

9. A method for processing information, performed by a network device, comprising:

   determining a peak data rate of a terminal,
   wherein a type of the terminal is a first type, and the peak data rate is stipulated by a protocol.

10. The method according to claim 9, further comprising:

   receiving capability information of the terminal sent by the terminal,
   wherein the capability information comprises at least one of:

a maximum number of multiple-input multiple-output (MIMO) layers of an uplink (UL) channel supported by the terminal;
a maximum number of MIMO layers of a downlink (DL) channel supported by the terminal;
a UL modulation order supported by the terminal;
a DL modulation order supported by the terminal; or
a scaling factor.

11. The method according to claim 9, wherein at least one piece of following information in the capability information is not applicable to the terminal of the first type:

the UL modulation order supported by the terminal;
the DL modulation order supported by the terminal; or
the scaling factor.

12. The method according to claim 10, wherein the capability information is further used to determine the peak data rate of a terminal of a second type.

13. The method according to any one of claims 9 to 12, wherein the peak data rate corresponding to a UL channel of the terminal of the first type is the same as or different from the peak data rate corresponding to a DL channel of the terminal of the first type.

14. The method according to any one of claims 9 to 12, wherein the peak data rate of the terminal of the first type supporting half duplex (HD) frequency division duplex (FDD) is the same as the peak data rate of the terminal of the first type supporting full duplex (FD) FDD.

15. The method according to any one of claims 9 to 12, wherein a plurality of terminals of the first type have a same peak data rate, and UL modulation orders and/or DL modulation orders supported by the plurality of terminals of the first type respectively are different from each other.

16. The method according to any one of claims 9 to 12, wherein a plurality of terminals of the first type have a same peak data rate, and numbers of MIMO layers of UL channels and/or numbers of MIMO layers of DL channels supported by the plurality of terminals of the first type respectively are different from each other.

17. A method for processing information, comprising:

a terminal and a network device determining a peak data rate of the terminal,
wherein a type of the terminal is a first type, and the peak data rate is stipulated by a protocol.

18. The method according to claim 17, further comprising:

the terminal sending capability information of the terminal to the network device,
wherein the capability information comprises at least one of:

a maximum number of multiple-input multiple-output (MIMO) layers of an uplink (UL) channel supported by the terminal;
a maximum number of MIMO layers of a downlink (DL) channel supported by the terminal;
a UL modulation order supported by the terminal;
a DL modulation order supported by the terminal; or
a scaling factor.

19. The method according to claim 18, wherein at least one piece of following information in the capability information is not applicable to the terminal of the first type:

the UL modulation order supported by the terminal;
the DL modulation order supported by the terminal; or
the scaling factor.

20. The method according to claim 18, wherein the capability information is further used to determine the peak data rate of a terminal of a second type.

21. The method according to any one of claims 17 to 20, wherein the peak data rate corresponding to a UL channel of the terminal of the first type is the same as or different from the peak data rate corresponding to a DL channel of the terminal of the first type.

22. The method according to any one of claims 17 to 20, wherein the peak data rate of the terminal of the first type supporting half duplex (HD) frequency division duplex (FDD) is the same as the peak data rate of the terminal of the first type supporting full duplex (FD) FDD.

23. The method according to any one of claims 17 to 20, wherein a plurality of terminals of the first type have a same peak data rate, and UL modulation orders and/or DL modulation orders supported by the plurality of terminals of the first type respectively are different from each other.

24. The method according to any one of claims 17 to 20, wherein a plurality of terminals of the first type have a same peak data rate, and numbers of MIMO layers of UL channels and/or numbers of MIMO layers of DL channels supported by the plurality of terminals of the first type respectively are different from each other.

25. A terminal, comprising:

a processing module configured to determine a peak data rate of the terminal,
wherein a type of the terminal is a first type, and the peak data rate is stipulated by a protocol.

26. A network device, comprising:

a processing module configured to determine a peak data rate of a terminal,
wherein a type of the terminal is a first type, and the peak data rate is stipulated by a protocol.

27. A communication apparatus, comprising:

one or more processors,
wherein the communication apparatus is configured to execute the method for processing information according to any one of claims 1 to 8.

28. A communication apparatus, comprising:

one or more processors,
wherein the communication apparatus is configured to execute the method for processing information according to any one of claims 9 to 16.

29. A communication system, comprising a terminal and a network device, wherein the terminal is configured to implement the method for processing information according to any one of claims 1 to 8, and the network device is configured to implement the method for processing information according to any one of claims 9 to 16.

30. A storage medium storing instructions which, when run on a communication device, cause the communication device to implement the method for processing information according to any one of claims 1 to 8 or 9 to 16.

communication system
100

| terminal 101 | — | network device 102 |

FIG. 1

terminal 101

network device 102

Step S2101, sending capability information →

Step S2102, obtaining the peak data rate of the terminal 101

Step S2103, obtaining the peak data rate of the terminal 101

FIG. 2A

| Capability information is sent to the network device 102 | S3101 |

↓

| A peak data rate is obtained | S3102 |

FIG. 3A

| A peak data rate is obtained | S3201 |

FIG. 3B

| Capability information sent by the terminal 101 is received | S4101 |

↓

| A peak data rate of the terminal 101 is determined | S4102 |

FIG. 4A

A peak data rate of the terminal 101 is determined    S4201

FIG. 4B

terminal 101

Step S5101, obtaining a
peak data rate of the
terminal 101

network device
102

Step S5102, obtaining a
peak data rate of the
terminal 101

FIG. 5

terminal 6100

transceiver
module 6101

processing
module 6102

FIG. 6A

network device 6200

transceiver
module 6201

processing
module 6202

FIG. 6B

7100

processor 7101

memory 7103

interface 7104

transceiver 7102

FIG. 7A

7200

processor 7201

interface 7202

memory 7203

FIG. 7B

## INTERNATIONAL SEARCH REPORT

| International application No. |
| --- |
| **PCT/CN2023/112743** |

| A. | CLASSIFICATION OF SUBJECT MATTER |
| --- | --- |
| | H04W 72/0446(2023.01)i |

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, WPABSC, DWPI: 峰值, 最大, 类型, 能力, 数据, 速率, 协议, 约定, 确定, 协商, 对应, 配置, 因子, 调制阶数, 层数, 全双工, 半双工, 终端, peak, maximum, type, capability, protocol, 3GPP, agreement, determine, negotiation, corresponding, configuration, factor, TBS, RedCap, eRedCap, MIMO, layer, HD-FDD, FD-HDD, UE

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115315983 A (BEIJING XIAOMI MOBILE SOFTWARE CO., LTD.) 08 November 2022 (2022-11-08)<br>description, paragraphs 52 and 140-143, and figure 11 | 1, 5-9, 13-17, 21-30 |
| Y | CN 115315983 A (BEIJING XIAOMI MOBILE SOFTWARE CO., LTD.) 08 November 2022 (2022-11-08)<br>description, paragraphs 52 and 140-143, and figure 11 | 2-4, 10-12, 18-20 |
| Y | CN 116390171 A (ZHEJIANG PUBLIC INFORMATION INDUSTRY CO., LTD. et al.) 04 July 2023 (2023-07-04)<br>description, paragraphs 23-51, and figure 1 | 2-4, 10-12, 18-20 |
| A | WO 2023022646 A1 (TELEFONAKTIEBOLAGET LM ERICSSON (PUBL)) 23 February 2023 (2023-02-23)<br>entire document | 1-30 |
| A | ERICSSON. "Other UE Complexity Reduction Aspects for RedCap"<br>*3GPP TSG-RAN WG1 Meeting #106-e, R1-2106566*, 07 August 2021 (2021-08-07),<br>entire document | 1-30 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 April 2024** | **16 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112743**

| Patent document cited in search report | | | Publication date (day/month/year) | Patent family member(s) | | | Publication date (day/month/year) |
|---|---|---|---|---|---|---|---|
| CN | 115315983 | A | 08 November 2022 | WO | 2024007273 | A1 | 11 January 2024 |
| CN | 116390171 | A | 04 July 2023 | None | | | |
| WO | 2023022646 | A1 | 23 February 2023 | None | | | |

Form PCT/ISA/210 (patent family annex) (July 2022)